# EUROPEAN PATENT SPECIFICATION

(11) **EP 0 759 675 B1**
(45) Date of publication and mention of the grant of the patent: **27.03.2002**
(21) Application number: 96202140.8
(22) Date of filing: 29.07.1996
(51) Int. Cl.: H04N 7/167

(54) **Method for providing access to information by way of enciphering/deciphering messages including transmitting and receiving devices**
Verfahren zum Zugriff auf Informationen durch Ver- und Entschlüsselung einschliesslich der Sende- und Empfangsgeräte
Méthode pour réaliser l'accès d'information par chiffrage/déchiffrage de messages comprenant récepteur et émetteur

(30) Priority: 10.08.1995 NL 1000964
(43) Date of publication of application: 26.02.1997
(73) Proprietor: Koninklijke KPN N.V., 9726 AE Groningen (NL)
(72) Inventor: Hekstra, Andries Pieter, 2252 KM Voorschoten (NL); van Tilburg, Johan, 2719 KK Zoetermeer (NL)

(56) References cited:
- EP-A- 0 256 596
- EP-A- 0 343 805
- EP-A- 0 438 145
- IEEE TRANSACTIONS ON CONSUMER ELECTRONICS, vol. 38, no. 3, 1 August 1992, pages 188-194, XP000311835 ANGEBAUD D ET AL: "CONDITIONAL ACCESS MECHANISMS FOR ALL-DIGITAL BROADCAST SIGNALS"

## Description

### A. BACKGROUND OF THE INVENTION

The invention relates to a method for, by way of enciphering/deciphering messages, providing authorised users with access to information, and not providing unauthorised users with access to information.

Such a method is of general knowledge and proceeds as follows. If a user is authorised, he disposes of a deciphering method for deciphering an enciphered message while, if said user is not authorised, he does not dispose of the deciphering method. As a result, an authorised user may decipher the message, which deciphered message provides him with access to certain information, while an unauthorised user cannot decipher the message, as a result of which he does not gain access to the information. Said information might, e.g., be recorded in the message, or is, e.g., transmitted to a user only after said user has returned the deciphered message, or is, e.g., transmitted to the user in enciphered state, with said user being capable of deciphering the enciphered information only on the basis of the deciphered message.

Such a method has the drawback, inter alia, that per authorised user a message has to be transmitted, which in the event of many users connected to a few nodes results in many messages to be serially transmitted, which give the known method an inefficient nature, with every user additionally seeing all (enciphered) messages passing.

### B. SUMMARY OF THE INVENTION

The object of the invention is, inter alia, to provide a method of the kind referred to in the preamble, with which providing access to the information proceeds in a more efficient way.

For this purpose, the method according to the invention is as set out in claim 1.

By transmitting the same message to the users in question, which message has been enciphered per user by way of an enciphering method associated with said user if said user is not authorised, and has not been enciphered by way of the enciphering method associated with said user if said user has been authorised, the users in question receive this same message while, since every user does not dispose of a deciphering method associated with said user for deciphering a message enciphered by way of an enciphering method associated with said user and does dispose of deciphering methods associated with other users for deciphering a message enciphered by way of enciphering methods associated with said other users, only the authorised users can decipher the enciphered message and can gain access to the information by way of the message deciphered by them, and the unauthorised users cannot gain access to the information by way of the message still enciphered for them, with, in the event of no unauthorised users, of course all authorised users being capable of gaining access to the information by way of the non-enciphered message. As a result, only one and the same message needs to be transmitted to the users in question, and the method according to the invention has a very efficient nature.

The invention is based, inter alia, on the insight that it is much more efficient to transmit one and the same enciphered message to all users (with only authorised users being capable of gaining access, by way of the deciphered message, to the information) than per next user to transmit a next, enciphered message.

Thus, the problem of the known method being inefficient is solved by transmitting the same message to the users in question, which message has been enciphered per user by way of an enciphering method associated with said user if said user has not been authorised, and has not been enciphered if said user has been authorised, with in this case every user not being permitted to dispose of a deciphering method associated with said user for deciphering a message enciphered by way of an enciphering method associated with said user, and has to dispose of deciphering methods associated with other users for deciphering a message enciphered by way of enciphering methods associated with said other users.

A first embodiment of the method according to the invention is characterised in that the information is enciphered by way of the non-enciphered message and can be deciphered only by way of the non-enciphered or deciphered message.

By enciphering the information by way of the non-enciphered message, with the information enciphered in this manner only being capable of being deciphered by way of the non-enciphered or deciphered message, only authorised users gain access to said information.

A second embodiment of the method according to the invention is characterised in that the message is enciphered prior to transmission by way of a further enciphering method, with the enciphered message being deciphered after receipt by way of a further deciphering method.

By enciphering the message prior to transmission by way of a further enciphering method, and after receipt deciphering it by way of a further deciphering method, the message is always transmitted in enciphered state, even if all users in question have been authorised, which benefits the security.

A third embodiment of the method according to the invention is
characterised in that a total number of users is distributed over a number of user groups, with a message being transmitted per user group.

By distributing a total number of users over a number of user groups, with one message being transmitted per user group, every user admittedly sees just as many messages passing as there are user groups, but said user only needs to decipher the message associated with his user group and said user only needs to dispose of the number of deciphering methods associated with all other users belonging to the same user group.

The invention further relates to a transmitter device as set out in the preamble claim 7.

Such a transmitter device is of general knowledge and operates as follows. Per user and by way of the enciphering device, the data message is enciphered by way of the enciphering method associated with said user, and the user-identification signal is added, by way of the adding device, to the data message, and the enciphered data message is transmitted to said user. If the user has been authorised, he disposes of a deciphering method for deciphering the enciphered data message while, if said user has not been authorised, he does not dispose of the deciphering method. As a result, an authorised user may decipher the data message, which deciphered data message provides him with access to certain information, while an unauthorised user cannot decipher the data message, as a result of which he does not gain access to the information.

Such a transmitter device has the drawback, inter alia, that per authorised user one data message has to be transmitted, which in the event of many users being connected to a few nodes results in many data messages to be transmitted serially which give the known whole an inefficient nature, with additionally every user seeing all (enciphered) messages passing.

The object of the invention, inter alia, is to provide a transmitter device of the kind referred to above, with which providing access to the information proceeds in a more efficient way.

For this purpose, the transmitter device according to the invention is characterised by the features set out in the characterizing portion of claim 7.

By generating, by way of the generator device, an authentication signal per user which has a first value in the event of an unauthorised user and which has a second value in the event of an authorised user, with the enciphering device being provided with the control input for per user receiving the authentication signal for, in response to an authentication signal having a first value, enciphering the data message by way of an enciphering method associated with said unauthorised user and for, in response to an authentication signal having a second value, not enciphering the data message by way of an enciphering method associated with said authorised user, the same data message may be transmitted to the users in question, which data message has been enciphered per user by way of an enciphering method associated with said user if said user has not been authorised, and has not been enciphered if said user has been authorised, and the users in question receive this same data message. If every user does not dispose of a deciphering method associated with said user for deciphering a data message enciphered by way of an enciphering method associated with said user, and does dispose of deciphering methods associated with other users for deciphering a data message enciphered by way of enciphering methods associated with said other users, only the authorised users may decipher the enciphered data message and gain access to the information by way of the data message deciphered by them, and the unauthorised users cannot gain access to the information by way of the data message still enciphered for them, with, in the event of no unauthorised users, of course all authorised users being capable of gaining access to the information by way of the non-enciphered data message. As a result, only one and the same data message needs to be transmitted to the users in question, and the whole according to the invention has a very efficient nature.

A first embodiment of the transmitter device according to the invention is characterised in that the transmitter device is provided with
- enciphering means for, by way of the data message, enciphering the information to be transmitted to the users.

By enciphering the information by way of enciphering means, with the information thus enciphered being capable of being deciphered only by way of the non-enciphered or deciphered data message, only authorised users gain access to said information.

A second embodiment of the transmitter device according to the invention is characterised in that the transmitter device is provided with
- a further enciphering device coupled to the enciphering device for enciphering the message by way of a further enciphering method.

By enciphering the data message prior to transmission by way of the further enciphering device, with, after receipt, it having to be deciphered by way of a further deciphering method, the data message is always transmitted in enciphered state, even if all users in question have been authorised, which benefits the security.

A third embodiment of the transmitter device according to the invention is characterised in that a total number of users is distributed over a number of user groups, with the transmitter device transmitting a data message per user group.

By distributing a total number of users over a number of user groups, with the transmitter device transmitting one data message per user group, every user admittedly sees just as many data messages passing as there are user groups, but said user only needs to decipher the data message associated with his user group and said user only needs to dispose of the number of deciphering methods associated with all other users belonging to the same user group.

The invention still further relates to a receiver device for receiving a data message for providing access to information for an authorised user and not providing access to information for an unauthorised user, which receiver device is provided with
- a detection device for detecting a user-identification signal added to the data message.

Such a receiver device is of general knowledge and operates as follows. Per user and by way of a transmitter device, the data message is deciphered by way of a deciphering method associated with said user, and a user-identification signal is added to the data message by way of the transmitter device, and the enciphered and amended data message is transmitted to said user. By way of the detection device, the user-identification signal added to the data message is detected, on the basis whereof it is established whether or not said data message is intended for said receiver device. If the user has been authorised, his receiver device disposes of a deciphering method for deciphering the enciphered data message while, if said user has not been authorised, his receiver device does not dispose of the deciphering method. As a result, an authorised user may decipher the data message, which deciphered data message provides him with access to certain information, while an unauthorised user cannot decipher the data message, as a result of which he does not gain access to the information.

Such a receiver device has the drawback, inter alia, that per authorised user one data message has to be transmitted, which in the event of many users being connected to a few nodes results in many data messages to be transmitted serially, which give the known whole an inefficient nature, with additionally every user seeing all (enciphered) messages passing.

A still further object of the invention, inter alia, is to provide a receiver device of the kind referred to above, with which providing access to the information proceeds in a more efficient way.

For this purpose, the receiver device according to the invention is characterised by the features of claim 12.

By detecting, by way of the further detection device from the user-identification signal, at least one authentication signal associated with another user which has a first value in the event of an unauthorised other user and which has a second value in the event of an authorised other user, and deciphering, by way of the deciphering device in response to at least one authentication signal associated with another user having a first value, the data message by way of a deciphering method associated with said unauthorised other user, and in response to at least one authentication signal associated with another user having a second value, not deciphering the data message by way of a deciphering method associated with said authorised other user, the same data message may be transmitted to the users in question, which data message has been enciphered per user by way of an enciphering method associated with said user if said user has not been authorised, and has not been enciphered if said user has been authorised, and the users in question receive this same data message. Only the authorised users may decipher the enciphered data message and gain access to the information by way of the data message deciphered by them, while, in the event of no unauthorised users, of course all authorised users may gain access to the information by way of the non-enciphered data message. As a result, only one and the same data message needs to be transmitted to the users in question and the whole according to the invention has a very efficient nature.

A first embodiment of the receiver device according to the invention is characterised in that the receiver device is provided with
- deciphering means for, by way of the deciphered or non-enciphered data message, deciphering the information to be received.

By enciphering the information by way of the transmitter device, with the information enciphered in this manner only being capable of being deciphered by way of the deciphering means, only authorised users gain access to said information.

A second embodiment of the receiver device according to the invention is characterised in that the receiver device is provided with
- a further deciphering device coupled to the deciphering device for deciphering the message by way of a further deciphering method.

If the data message is enciphered prior to transmission by way of the transmitter device, with, after receipt, it then having to be deciphered by way of the further deciphering device, the data message may always be transmitted in enciphered state, even if all users in question have been authorised, which benefits the security.

A third embodiment of the receiver device according to the invention is characterised in that a total number of users is distributed over a number of user groups, with the receiver device being provided with
- detection means for detecting a data message associated with a certain user group.

By distributing a total number of users over a number of user groups, with a transmitter device transmitting one data message per user group, every user admittedly sees just as many data messages passing as there are user groups, but said user needs to detect, by way of the detection means, and to decipher only the data message associated with his user group, and said user needs to dispose of only the number of deciphering methods associated with all other users belonging to the same user group.

EP 0 641 103 discloses a method and a device for distributing keys in a selectively transmitting system. In this case, every receiver disposes not of his own key but of the keys of all other receivers. The transmitter by way of a combination key transmits encrypted information, which combination key is obtained by modulo-2 addition of those keys which belong to all unauthorised receivers. Since unauthorised receivers do not dispose of their own keys, they cannot, knowing which receivers are unauthorised, imitate the combination key, while authorised receivers, knowing which receivers are unauthorised, may imitate the combination key, as a result of which the encrypted information can be decrypted only by the authorised receivers with the help of the combination key. A drawback here is, inter alia, that adding/removing an authorisation immediately leads to a modified combination key, with which the information is encrypted, as a result of which said adding/removing of an authorisation may take place either only at a very limited number of moments without great technical problems arising, or occurs at arbitrary moments, involving great technical problems. Neither the method according to the invention, nor the devices according to the invention, are disclosed in this patent.

### C. REFERENCES

■ EP 0 641 103
■ "Tracing Trators", by Benny Chor and Amos Fiat and Moni Naor, Advances in Cryptology, Crypto '94, 14th Annual International Cryptology Conference, Santa Barbara, California, USA, August 21-25, 1994
■ "Broadcast Encryption", by Amos Fiat and Moni Naor, Advances in Cryptology, Crypto '93, 13th Annual International Cryptology Conference, Santa Barbara, California, USA, August 23-25, 1993
■ "Contemporary Cryptology", The Science of Information Integrity, edited by Gustavus J. Simmons, IEEE press, 1992
■ "Cryptography: a new dimension in computer data security", A guide for the Design and Implementation of Secure Systems, by Carl H. Meyer and Stephen M. Matyas, A Wiley-Interscience Publication, John Wiley & Sons, 1982

### D. EXEMPLARY EMBODIMENT

The invention will be explained in greater detail by reference to an exemplary embodiment shown in the figures. Here,

FIG. 1 shows a transmitter device according to the invention for application in the method according to the invention, and

FIG. 2 shows a receiver device according to the invention for application in the method according to the invention.

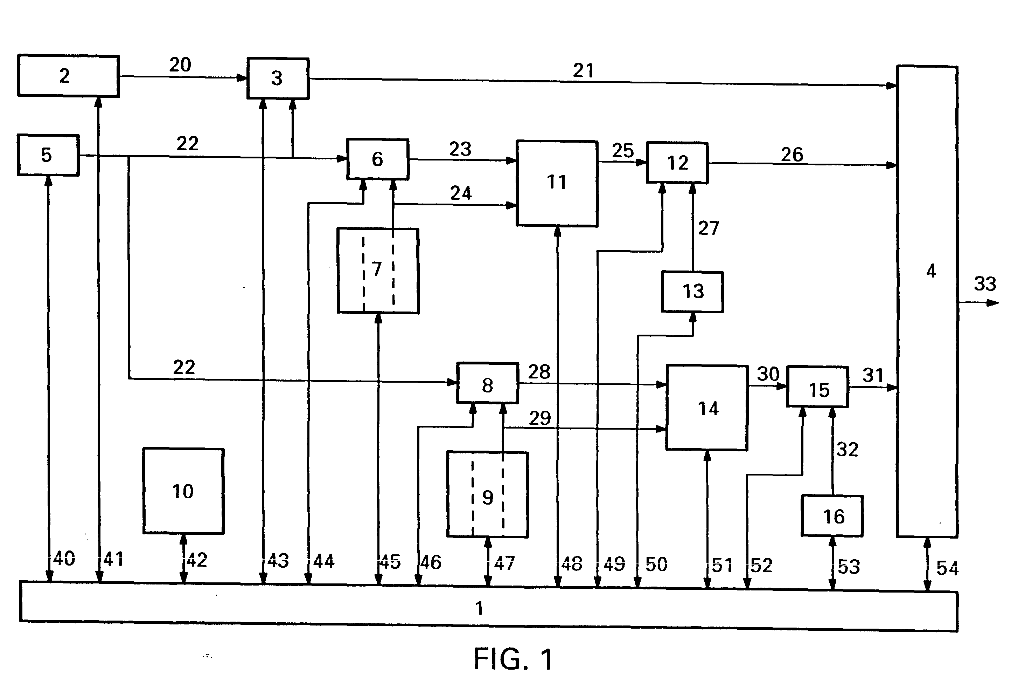

The transmitter device according to the invention shown in FIG. 1 comprises an information source 2 which is coupled, by way of a control connection 41, to a processor 1 and of which an output is coupled, by way of a connection 20, to a first input of enciphering means 3. Furthermore, the transmitter device shown in FIG. 1 comprises a message memory 5 which is coupled, by way of a control connection 40, to processor 1 and of which an output is coupled, by way of a connection 22, to a second input of enciphering means 3 and to a first input of a first enciphering device 6 and to a first input of a second enciphering device 8. A processor memory 10 is coupled, by way of a control connection 42, to processor 1; enciphering means 3 are coupled, by way of a control connection 43, to processor 1; first enciphering device 6 is coupled, by way of a control connection 44, to processor 1; and second enciphering device 8 is coupled, by way of a control connection 46, to processor 1. An output of enciphering means 3 is coupled, by way of a connection 21, to a first input of multiplexer 4. A second input of first enciphering device 6 is connected, by way of a connection 24, to an output of a first table memory 7 which is coupled, by way of a control connection 45, to processor 1. A second input of second enciphering device 8 is connected, by way of a connection 29, to an output of a second table memory 9 which is coupled, by way of a control connection 47, to processor 1. An output of first enciphering device 6 is coupled, by way of a connection 23, to a first input of a first adding device 11 which is coupled, by way of a control connection 48, to processor 1 and of which a second input is connected, by way of connection 24, to the output of first table memory 7. An output of second enciphering device 8 is coupled, by way of a connection 28, to. a first input of a second adding device 14 which is coupled, by way of a control connection 51, to processor 1 and of which a second input is connected, by way of connection 29, to the output of second table memory 9. An output of first adding device 11 is coupled, by way of a connection 25, to a first input of a third enciphering device 12 which is coupled, by way of a control connection 49, to processor 1 and of which a second input is connected, by way of a connection 27, to an output of a first code memory 13 which is coupled, by way of a control connection 50, to processor 1. An output of second adding device 14 is coupled, by way of a connection 30, to a first input of a fourth enciphering device 15 which is coupled, by way of a control connection 52, to processor 1 and of which a second input is connected, by way of a connection 32, to an output of a second code memory 16 which is coupled, by way of a control connection 53, to processor 1. An output of third enciphering device 12 is coupled, by way of a connection 26, to a second input of multiplexer 4, and an output of fourth enciphering device 15 is coupled, by way of a connection 31, to a third input of multiplexer 4 of which an output is connected to a connection 33 and which is coupled, by way of a control connection 54, to processor 1.

The operation of the transmitter device shown in FIG. 1 is as follows. A Pay-TV video signal to be transmitted is stored in information source 2. Prior to the transmission thereof, the being authorised or not of users belonging to a first user group has to be recorded in first table memory 7, and the being authorised or not of users belonging to a second user group has to be recorded in second table memory 9. For this purpose, both table memories 7 and 9 each dispose of three columns - a first column for per row storing a user identity, a second column for per row storing the being authorised or not of the associated user, and a third column for per row storing an enciphering method coupled to the associated user. Generally, the data stored in the first and the third column will already be present, or be stored for a longer period of time, while the data required in the second column will have to be established per Pay-TV video signal to be transmitted, and loaded into both table memories 7 and 9. This is then done by way of the control connections 45 and 47, and by way of processor 1. Per Pay-TV video signal to be transmitted, there is further established a message which, by way of control connection 40 and by way of processor 1, is loaded into message memory 5.

Message memory 5 receives, by way of control connection 40, a command signal originating from processor 1 and generates, in response thereto, the stored message which is fed, by way of connection 22, to enciphering means 3, and to first enciphering device 6 and to second enciphering device 8. Enciphering means 3 further receive, by way of connection 20, the Pay-TV video signal originating from information source 2, which is transmitted by information source 2 in response to a command signal to be received by way of control connection 41 and originating from processor 1, and encipher said Pay-TV video signal on the basis of the message under control of control signals to be received by way of control connection 43 and originating from processor 1, whereafter the enciphered video signal is fed to multiplexer 4 by way of connection 21.

First table memory 7 receives, by way of control connection 45, a command signal originating from processor 1 and consecutively generates, in response thereto, a first group identification and (part of) the data stored per row (or per user identification), with the first group identification and all user identifications and user authorisations stored in the first and second columns per row (or per user identification) being fed, by way of connection 24, to first adding device 11 while, of the enciphering methods stored in the third column, only the enciphering methods associated with the unauthorised users are fed, by way of connection 24, to first enciphering device 6. Under control of control signals to be received by way of control connection 44 and originating from processor 1, first enciphering device 6 enciphers the arrived message according to the enciphering methods associated with the unauthorised users, e.g., by consecutively applying said enciphering methods in a certain order to the message. Subsequently, first enciphering device 6 feeds the message thus enciphered in a first manner, under control of processor 1, to first adding device 11 by way of connection 23. First adding device 11 combines, in response to control signals originating from processor 1 and to be received by way of control connection 48, the message enciphered in a first manner with the first group identification and all user identifications and user authorisations stored in first table memory 7, and feeds the combined whole, under control of processor 1, to third enciphering device 12 by way of connection 25. First code memory 13 receives, by way of control connection 50, a command signal originating from processor 1 and generates, in response thereto, a first code which is fed, by way of connection 27, to third enciphering device 12. Under control of control signals to be received by way of control connection 49 and originating from processor 1, third enciphering device 12 enciphers the arrived combined whole on the basis of the first code. Subsequently, third enciphering device 12 feeds the whole thus enciphered by way of the first code, under control of processor 1, to multiplexer 4 by way of connection 26.

Second table memory 9 receives, by way of control connection 47, a command signal originating from processor 1 and consecutively generates, in response thereto, a second group identification and (part of) the data stored per row (or per user identification), with the second group identification and all user identifications and user authorisations stored in the first and second columns per row (or per user identification) being fed, by way of connection 29, to second adding device 14 while, of the enciphering methods stored in the third column, only the enciphering methods associated with the unauthorised users are fed, by way of connection 29, to second enciphering device 8. Under control of control signals to be received by way of control connection 46 and originating from processor 1, second enciphering device 8 enciphers the arrived message according to the enciphering methods associated with the unauthorised users, e.g., by consecutively applying said enciphering methods in a certain order to the message. Subsequently, second enciphering device 8 feeds the message thus enciphered in a second manner, under control of processor 1, to second adding device 14 by way of connection 28. Second adding device 14 combines, in response to control signals originating from processor 1 and to be received by way of control connection 51, the message enciphered in a second manner with the second group identification and all user identifications and user authorisations stored in second table memory 9, and feeds the combined whole, under control of processor 1, to fourth enciphering device 15 by way of connection 30. Second code memory 16 receives, by way of control connection 53, a command signal originating from processor 1 and generates, in response thereto, a second code which is fed, by way of connection 32, to fourth enciphering device 15. Under control of control signals to be received by way of control connection 52 and originating from processor 1, fourth enciphering device 15 enciphers the arrived combined whole on the basis of the second code. Subsequently, fourth enciphering device 15 feeds the whole thus enciphered by way of the second code, under control of processor 1, to multiplexer 4 by way of connection 31.

Under control of control signals to be received by way of control connection 54 and originating from processor 1, multiplexer 4 combines the enciphered video signal with the whole enciphered by way of the first code and the whole enciphered by way of the second code, whereafter the result is transmitted, by way of connection 33, to at least the users belonging to the first and the second user groups.

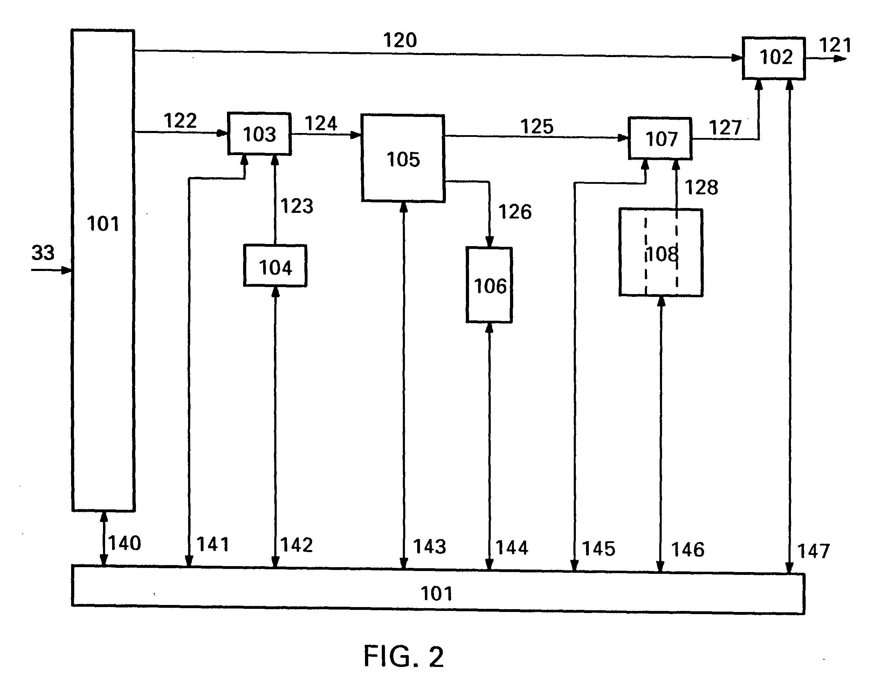

The receiver device shown in FIG. 2 according to the invention comprises a demultiplexer 101, of which an input is connected to connection 33 and which is coupled, by way of a control connection 140, to a processor 100. A first output of demultiplexer 101 is coupled, by way of a connection 120, to a first input of deciphering means 102 which are coupled, by way of a control connection 147, to processor 100. An output of deciphering means 102 is connected to a connection 121 for coupling to an information processor such as, e.g., a television set, and a second input of deciphering means 102 is connected to an output of a first deciphering device 107 by way of a connection 127. A first input of first deciphering device 107 is coupled to a first output of a splitting device 105 by way of a connection 125, and a second input of first deciphering device 107 is connected, by way of a connection 128, to an output of a third table memory 108 which is coupled, by way of a control connection 146, to processor 100. By way of a control connection 145, first deciphering device 107 is coupled to processor 100. A second output of splitting device 105 is coupled, by way of a connection 126, to an input of a data memory 106 which is coupled, by way of a control connection 144, to processor 100. An input of splitting device 105 is connected, by way of a connection 124, to an output of a second deciphering device 103, while splitting device 105 is coupled, by way of a control connection 143, to processor 100. A first input of second deciphering device 103 is coupled, by way of a connection 122, to a second output of demultiplexer 101 and a second input is connected, by way of a connection 123, to an output of a third code memory 104 which is coupled, by way of a control connection 142, to processor 100. By way of a control connection 141, second enciphering device 103 is coupled to processor 100.

The operation of the receiver device shown in FIG. 2 is as follows, it being assumed that said receiver device is associated with an authorised user belonging to the first user group (in the transmitter device, the message then has therefore not been enciphered by way of the enciphering method associated with said authorised user, but has possibly been enciphered by way of the enciphering methods associated with other, unauthorised users). Under control of control signals to be received by way of control connection 140 and originating from processor 100, demultiplexer 101 separates the enciphered video signal from the whole enciphered by way of the first code and the whole enciphered by way of the second code, whereafter the enciphered video signal is fed, by way of connection 120, to deciphering means 102 and the whole enciphered by way of the first code is fed, by way of connection 122, to second deciphering device 103. Third code memory 104 receives, by way of control connection 142, a command signal originating from processor 100 and generates, in response thereto, a third code which is fed, by way of connection 123, to second deciphering device 103. Under control of control signals to be received by way of control connection 141 and originating from processor 100, second deciphering device 103 deciphers the whole enciphered by way of the first code on the basis of the third code. In general, the first code and the third code will be equal in this case. Subsequently, second deciphering device 103 feeds the whole thus deciphered by way of the third code, under control of processor 100, to splitting device 105 by way of connection 124.

Splitting device 105 splits, in response to control signals originating from processor 100 and to be received by way of control connection 143, the whole deciphered by way of the third code into, on the one hand, the message enciphered in a first manner and, on the other hand, the first group identification and all user identifications and user authorisations, and under control of processor 100 feeds the message enciphered in a first manner to first deciphering device 107 by way of connection 125 and feeds, under control of processor 100, the first group identification and all user identifications and user authorisations to data memory 106 by way of connection 126. Processor 100 detects, by way of control connection 144, that the first group identification has been stored in data memory 106 (e.g., by comparison to a third group identification stored in table memory 108 and to be fed, by way of control connection 146, to processor 100, which third group identification then has to match the first group identification), as a result of which it has been established that said data is indeed intended for said receiver device.

Third table memory 108 disposes of three columns - a first column for per row storing a user identity, a second column for per row storing the being authorised or not of the associated user, and a third column for per row storing an enciphering method coupled to the associated user. In general, the data stored in the first and the third column will already be present, or be stored for a longer period of time, while the data required in the second column will have to be established per Pay-TV video signal to be transmitted, and be loaded into table memory 108. This is done under control of processor 100 by feeding the user identifications and user authorisations stored in data memory 106, by way of control connection 144 and by way of processor 100 and by way of control connection 146, to third table memory 108.

Third table memory 108 receives, by way of control connection 146, a command signal originating from processor 100 and consecutively generates, in response thereto, (part of) the data per row (or per user identification) stored in the third column while, of the deciphering methods stored in the third column, only the deciphering methods associated with the unauthorised users are fed, by way of connection 128, to first deciphering device 107. Under control of control signals to be received by way of control connection 145 and originating from processor 100, first deciphering device 107 deciphers the enciphered message according to the deciphering methods associated with the unauthorised users, e.g., by consecutively applying said deciphering methods in a certain order (inverted with respect to the transmitter device) to the message. Subsequently, first deciphering device 107 feeds the thus deciphered message, under control of processor 100, to deciphering means 102 by way of connection 127.

Deciphering means 102 receive, by way of control connection 147, control signals originating from processor 100 and decipher, in response thereto, the enciphered video signal on the basis of the deciphered message to be received by way of connection 127, whereafter the original Pay-TV video signal may be viewed by way of connection 121 and by way of, e.g., the television set.

For the operation of the receiver device shown in FIG. 2 in so far as the whole enciphered in the transmitter device by way of the second code is concerned, which is therefore intended for another (second) user group, there are at least three options. In the first place, demultiplexer 101 might already make a selection, e.g., by ignoring a certain time interval, so that the whole enciphered by way of the second code does not pass demultiplexer 101. In the second place, the whole enciphered by way of the second code might, e.g., since it is separated in time from the whole enciphered by way of the first code, pass demultiplexer 101 and might, some time after the whole enciphered by way of the first code has been offered, be offered to second deciphering device 103 while, since the second code differs from the third code stored in the third code memory, this time there is effected no correct deciphering here, as a result of which splitting device 105 and/or data memory 106 will have to deal with gibberish.

In the third place, the whole enciphered by way of the second code might, e.g., since it is separated in time from the whole enciphered by way of the first code, pass demultiplexer 101 and might, some time after the whole enciphered by way of the first code has been offered, be offered to second deciphering device 103 while, since the second code this time does not differ from the third code stored in the third code memory, there is effected a correct deciphering here. In response to control signals originating from processor 100 and to be received by way of control connection 143, splitting device 105 splits the whole deciphered by way of the third code into, on the one hand, the message enciphered in a second manner and, on the other hand, the second group identification and all user identifications and user authorisations, and splitting device 105 feeds, under control of processor 100, the message enciphered in a second manner to first deciphering device 107 by way of connection 125, and splitting device 105 feeds, under control of processor 100, the second group identification and all user identifications and user authorisations to data memory 106 by way of connection 126. Processor 100 detects, by way of control connection 144, that another (the second) group identification is stored in data memory 106 (e.g., by comparison to a third group identification stored in table memory 108 and to be fed, by way of control connection 146, to processor 100, which third group identification then has to match the first group identification), as a result of which it is established that said data is not intended for said receiver device. Independently from said detection, of course, the message enciphered in a second manner will generally not be capable of being deciphered in a correct manner by way of first deciphering device 107.

The operation of the receiver device shown in FIG. 2, if it is assumed that said receiver device is associated with a user belonging to the first user group but this time unauthorised (in the transmitter device, the message then is therefore enciphered by way of the enciphering method associated with said unauthorised user and possibly still further enciphered by way of enciphering methods associated with other, unauthorised users and therefore not enciphered by way of the enciphering methods associated with the remaining authorised users of said user group), is in accordance with the above, with the exception of the following.

Third table memory 108 receives, by way of control connection 146, a command signal originating from processor 100 and consecutively generates, in response thereto and for feeding, by way of connection 128, to first deciphering device 107, the deciphering methods stored in the third column which are associated with the unauthorised users, with the exception of the deciphering method associated with said unauthorised user who manages the receiver device. Not generating said one deciphering method either is, e.g., the result of said deciphering method not being present in said table memory 108, or all this is the result of said one deciphering method admittedly being present but on the contrary being deactivated in said table memory 108. This time, first deciphering device 107 does therefore not succeed in deciphering the enciphered message according to the deciphering methods associated with the unauthorised users, since one of said deciphering methods is not available. As a result, a still enciphered message is fed to deciphering means 102, with which the enciphered video signal cannot be deciphered.

If the Pay-TV video signal is an analogue signal, enciphering means 3 and deciphering means 102 are film coders and film decoders known to those skilled in the art. Multiplexer 4 and demultiplexer 101 then are, e.g., so-called television chips with which there may be combined analogue video signals and digital teletext signals (and therefore also enciphered messages and user identifications etc.). If the Pay-TV video signal is a digital signal, enciphering means 3 and deciphering means 102 are, e.g., so-called encryption chips and decryption chips which each convert, e.g., a 64-bit input word as a function of, e.g., a 64-bit key word into a 64-bit output word. The enciphering devices 6, 8, 12 and 15 and the deciphering devices 103 and 107 might also be realised with encryption chips and decryption chips. In this case, the messages and the enciphering methods and the deciphering methods therefore comprise so-called keys.

The concept of "information" should be interpreted as having the broadest possible significance. Not only might it therefore concern a Pay-TV video signal, but an option also is to transmit, e.g., by way of a cable network, aviation information to the homes of aviation personnel with, e.g., a first part of the aviation personnel being fully authorised, while a second and a third part of the aviation personnel is each authorised only with respect to a different part of the aviation information. Apart from this, the information might be transmitted, e.g., by way of the electric mains, to homes of users with in this case, e.g., the boilers and/or sun screens of only authorised users being capable of being driven. Also, the concept of "by way of enciphering/deciphering messages, providing access to information" should be interpreted as having the broadest possible significance, since the information source and the message source might coincide as well as be geographically separated, while the information in certain cases might even be completely recorded in the messages (the deciphered or non-enciphered message then matches, in whole or in part, the information).

If a user buys or hires a receiver device, said receiver device will generally already be provided with a user identification (e.g., stored in data memory 106 and/or in table memory 108) and a standard deciphering method and/or standard key (generally stored in code memory 104). The first message to be transmitted to said receiver device then has to be enciphered in the transmitter device by way of a standard enciphering method and/or standard key (generally stored in code memory 13 and/or 16), and is deciphered in the receiver device, whereafter the receiver device is loaded with the data present in the deciphered message such as, e.g., a new code (which is generally stored in code memory 104) and a group identification and user identifications of users belonging to the same group (which are stored, e.g., in data memory 106 and/or in table memory 108) and associated deciphering methods and/or keys (which are stored, e.g., in table memory 108). Also, extending and/or amending and/or modifying data already stored in the receiver device will generally be effected by way of one or more messages. In this case, messages may be provided with an indication, which indication indicates that said message is mainly intended for deciphering device 107 and/or deciphering means 102, or indicates that the message is mainly intended for adjusting data, and which indication has to be detected by way of splitting device 105 and/or data memory 106 and/or processor 100.

## Claims

1. A method, which enciphers and deciphers messages, for providing access to information for authorised users and denying access to the information to unauthorised users, the authorised and unauthorised users collectively forming a plurality of users, each user being associated with a respective enciphering and deciphering method, the method comprising the steps of:
- enciphering a common message containing information to be transmitted to users of the plurality of users as to form an enciphered message,
- transmitting the enciphered message to the plurality of users,
- receiving the enciphered message by users of the plurality of users, and
- deciphering the enciphered message by users of the plurality of users,
**characterized in that:**
the step of enciphering includes successively enciphering the common message only through the enciphering method associated with each of the unauthorised users and not enciphering the common message through the enciphering method associated with each of the authorised users, so as to form the enciphered message, and
the step of deciphering includes successively deciphering the enciphered message by each authorised user through the deciphering methods associated with the unauthorised users of the plurality of users so as to yield a deciphered message and gaining access to the information contained therein,

2. Method according to claim 1, **characterized in that** the information is enciphered by way of the non-enciphered message and may be deciphered only by way of the non-deciphered or deciphered message.

3. Method according to claim 1 or 2, **characterized in that** the message is enciphered prior to transmission through a further enciphering method, the enciphered message after receipt being deciphered by way of a further deciphering method.

4. Method according to any of the claims 1 - 3, **characterized in that** the method further comprises a step of adding to the enciphered common message a user-identification signal and an authentication signal for each user of the plurality of users, the authentication signal having a first or second value in the event said one user is unauthorised or authorised, respectively, and the step of deciphering being carried out by successively deciphering the enciphered message by each authorised user through the deciphering methods associated with the unauthorised users of the plurality of users in accordance with the authentication signals added to the enciphered message.

5. Method according to claims 4, **characterized in that** adding to the enciphered common message of the user-identification signals and authentication signals for each user of the plurality of users occurs in a predefined order, that the step of enciphering the common message through the enciphering methods associated with the unauthorised users is carried out in accordance with said predefined order, and the step of deciphering is carried out through the deciphering methods associated with the unauthorised users of the plurality of users in an order reversed to said predefined order.

6. Method according to any of the claims 1 - 5, **characterized in that** the plurality of users is distributed over a number of user groups, further comprising the step of transmitting a single enciphered message to each user group.

7. A transmitter device which transmits enciphered messages to users, for providing access to information to authorised users and denying access to the information to unauthorised users, the authorised and unauthorised users collectively forming a plurality of users, each user being associated with a respective enciphering method, the transmitter device comprising:
an enciphering device (6; 8) for enciphering a common message to be transmitted to users of the plurality of users, and
an adding device (11; 14) for adding user-specific signals to the enciphered common message,
**characterized in that** the transmitter device further comprises:
a generation device (7; 9) for generating a corresponding authentication signal for each of the plurality of users, the corresponding authentication signal for each user having a first or second value in the event said each user is unauthorised or authorised, respectively,
the enciphering device (6; 8) having a control input (24; 29) for receiving the corresponding authentication signal for each of said plurality of users and, in response to the authentication signal having a first value, enciphering the common message through the enciphering method associated with each of said unauthorised users and, in response to an authentication signal having a second value, for not enciphering the message, and the corresponding authentication signals for the plurality of users being contained in the user-specific signals.

8. The transmitter device according to claim 7, **characterized in that** the transmitter device comprises enciphering means (3) for enciphering, by way of the common message, the information to be transmitted to the users.

9. The transmitter device according to claim 7 or 8, **characterized in that** the transmitter device comprises a further enciphering device (12; 15) coupled to the first enciphering device (6; 8) for enciphering each of the enciphered messages through a second enciphering method.

10. The transmitter device according to any of the claims 7 - 9, **characterized in that** the generation device generates the authentication signals for the users of the plurality of users in a predefined order, and **in that** the enciphering device enciphers the common message through successively using the enciphering methods of the unauthorised users of the plurality of users in accordance with said predefined order.

11. The transmitter device according to any of the claims 7 - 10, **characterized in that** the plurality of users is distributed over a number of user groups, and the transmitter device transmits a single enciphered message to each user group.

12. A receiver device, which receives an enciphered message, for providing access to information to an authorised user and denying access to the information to an unauthorised user, the authorised and unauthorised users collectively forming a plurality of users wherein the receiver device comprises:
a detection device (100, 105, 106) for detecting user-specific signals received with the enciphered message, and
a deciphering device (107) for deciphering the enciphered message using the detected user-specific signals,
**characterized in that** the receiver device comprises:
a further detection device (100, 106, 108), coupled to the first mentioned detection device, for detecting, from the user-specific signals, an authentication signal associated with each user of the plurality of users which has a first or second value in the event that a user is unauthorised or authorised, respectively, to have access to information contained in the enciphered message,
the deciphering device (107) being coupled to the second detection device for deciphering, in response to said authentication signal having the first value, the enciphered message through deciphering methods associated with the unauthorized users and, in response to the authentication signal having the second value, not deciphering the enciphered message,
wherein each user of the plurality of users disposes of the deciphering methods associated with the other ones of the plurality of users for deciphering the enciphered message, but does not dispose of the deciphering method associated with said each user himself.

13. The receiver device according to claim 12, **characterized in that** the receiver device comprises deciphering means (102) for deciphering, by way of the deciphered or non-enciphered message, the information to be received.

14. The receiver device according to claim 12 or 13, **characterized in that** the receiver device comprises a further deciphering device (103) coupled to the first mentioned deciphering device (107) for deciphering the deciphered message through a second deciphering method to yield the information contained therein.

15. The receiver device according to any of the claims 12 - 14, **characterized in that** the further detection device has been arranged for detecting the authentication signals for the users of the plurality of users in a predefined order, and **in that** the first mentioned deciphering device (107) deciphers the common message through successively using the deciphering methods of the unauthorised users of the plurality of users in accordance with said predefined order.

16. The receiver device according to any of the claims 12 - 15, **characterised in that** a total number of users is distributed over a number of user groups, and the receiver device further comprises detection means (100, 106, 144) for detecting an enciphered message destined for a corresponding user group.

## Patentansprüche

1. Verfahren, welches Nachrichten verschlüsselt und entschlüsselt, zum Liefern von Zugang zu Information für berechtigte Benutzer und dem Verweigern des Zugangs zu Information für nicht berechtigte Benutzer, wobei die berechtigten und die nicht berechtigten Benutzer kollektiv eine Vielzahl von Benutzern bilden, wobei jedem Benutzer ein jeweiliges Verschlüsselungs- und Entschlüsselungsverfahren zugeordnet ist, wobei das Verfahren die Schritte aufweist:
- Verschlüsseln einer gemeinsamen Nachricht, die zu übertragende Information an Benutzer aus der Vielzahl von Benutzern enthält, um eine verschlüsselte Nachricht zu bilden,
- Übertragen der verschlüsselten Nachricht an die Vielzahl von Benutzern,
- Empfangen der verschlüsselten Nachricht durch Benutzer aus der Vielzahl von Benutzern, und
- Entschlüsseln der verschlüsselten Nachricht durch Benutzer aus der Vielzahl von Benutzern,
**dadurch gekennzeichnet, dass**
- der Schritt des Verschlüsselns das aufeinanderfolgende Verschlüsseln der gemeinsamen Nachricht nur durch das Verschlüsselungsverfahren umfasst, welches jedem der nicht berechtigten Benutzer zugeordnet ist, und das Nicht-Verschlüsseln der gemeinsamen Nachricht durch das Verschlüsselungsverfahren, welches jedem der berechtigten Benutzer zugeordnet ist, um die verschlüsselte Nachricht zu bilden, und
- der Schritt des Entschlüsseln das aufeinanderfolgende Entschlüsseln der verschlüsselten Nachricht durch jeden berechtigten Benutzer durch die Entschlüsselungsverfahren umfasst, die den nicht berechtigten Benutzer aus der Vielzahl von Benutzern zugeordnet ist, um eine entschlüsselte Nachricht zu ergeben und Zugang zu der hierin enthaltenen Information zu erhalten.

2. Verfahren nach Anspruch 1, **dadurch gekennzeichnet, dass** die Information durch die nicht-verschlüsselte Nachricht verschlüsselt wird und nur durch die nicht-entschlüsselte oder entschlüsselte Nachricht entschlüsselt werden kann.

3. Verfahren nach Anspruch 1 oder 2, **dadurch gekennzeichnet, dass** die Nachricht vor der Übertragung durch ein weiteres Verschlüsselungsverfahren verschlüsselt wird, wobei die verschlüsselte Nachricht nach Empfang durch ein weiteres Entschlüsselungsverfahren entschlüsselt wird.

4. Verfahren nach einem der Ansprüche 1 bis 3, **dadurch gekennzeichnet, dass** das Verfahren weiterhin einen Schritt des Hinzufügens der verschlüsselten gemeinsamen Nachricht zu einem Benutzeridentifikationssignal und einem Authentifizierungssignal für jeden Benutzer aus der Vielzahl der Benutzer umfasst, wobei das Authentifizierungssignal einen ersten oder zweiten Wert in dem Falle hat, dass der besagte eine Benutzer nicht berechtigt bzw. berechtigt ist, und dass der Schritt des Entschlüsselns ausgeführt wird durch aufeinanderfolgendes Entschlüsseln der verschlüsselten Nachricht durch jeden berechtigten Benutzer durch die Entschlüsselungsverfahren, die nicht berechtigten Benutzern aus der Vielzahl der Benutzer zugeordnet sind in Übereinstimmung mit den Authentifizierungssignalen, die der verschlüsselten Nachricht hinzugefügt sind.

5. Verfahren nach Anspruch 4, **dadurch gekennzeichnet, dass** das Hinzufügen der verschlüsselten gemeinsamen Nachricht der Benutzeridentifikationssignale und Authentifizierungssignale für jeden Benutzer aus der Vielzahl der Benutzer in einer vorbestimmten Reihenfolge geschieht, dass der Schritt des Verschlüsselns der gemeinsamen Nachricht durch die Verschlüsselungsverfahren, die nicht berechtigten Benutzern zugeordnet sind, in Übereinstimmung mit dieser vorbestimmten Ordnung ausgeführt werden und dass der Schritt des Entschlüsselns ausgeführt wird durch die Entschlüsselungsverfahren, die nicht berechtigten Benutzern aus der Vielzahl von Benutzern zugeordnet sind, in einer umgekehrten Reihenfolge zu der vordefinierten Reihenfolge.

6. Verfahren nach einem der Ansprüche 1 bis 5, **dadurch gekennzeichnet, dass** die Vielzahl der Benutzer über eine Anzahl von Benutzergruppen verteilt ist, weiterhin umfassend den Schritt des Übertragens einer einzelnen verschlüsselten Nachricht an jede Benutzergruppe.

7. Übertragungsvorrichtung, welche verschlüsselte Nachrichten an Benutzer überträgt, zum Liefern des Zugangs zu Information für berechtigte Benutzer und zum Verweigern des Zugangs zu der Information für nicht berechtigte Benutzer, wobei die berechtigten und nicht berechtigten Benutzer kollektiv eine Vielzahl von Benutzern bilden, wobei jedem Benutzer ein jeweiliges Verschlüsselungsverfahren zugeordnet ist, wobei die Übertragungsvorrichtung umfasst:
- eine Verschlüsselungsvorrichtung (6; 8) zum Verschlüsseln einer gemeinsamen Nachricht, die an Benutzer aus der Vielzahl der Benutzer zu übertragen ist, und
- eine Addiereinrichtung (11; 14) zum Hinzufügen von benutzerspezifischen Signalen zu der verschlüsselten gemeinsamen Nachricht,
**dadurch gekennzeichnet, dass** die Übertragungsvorrichtung weiter umfasst:
- eine Erzeugungsvorrichtung (7; 9) zum Erzeugen eines korrespondierenden Authentifizierungssignals für jeden aus der Vielzahl der Benutzer, wobei das korrespondierende Authentifizierungssignal für jeden Benutzer einen ersten oder zweiten Wert in dem Falle aufweist, dass jeder Benutzer berechtigt bzw. nicht berechtigt ist,
- wobei die Verschlüsselungsvorrichtung (6; 8) einen Steuereingang (24; 29) zum Empfang des korrespondierenden Authentifizierungssignals für jeden aus der Vielzahl der Benutzer aufweist und in Antwort auf das Authentifizierungssignal mit einem ersten Wert die gemeinsame Nachricht durch das Verschlüsselungsverfahren verschlüsselt, welches jedem der besagten nicht berechtigten Benutzer zugeordnet ist, und in Antwort auf ein Authentifizierungssignal mit einem zweiten Wert die Nachricht nicht verschlüsselt, und die entsprechenden Authentifizierungssignale für die Vielzahl der Benutzer in den benutzerspezifischen Signalen enthalten sind.

8. Übertragungsvorrichtung nach Anspruch 7, **dadurch gekennzeichnet, dass** die Übertragungsvorrichtung Verschlüsselungsmittel (3), um über die gemeinsame Nachricht die Information zu verschlüsseln, die an die Benutzer zu übertragen ist.

9. Übertragungsvorrichtung nach einem der Ansprüche 7 oder 8, **dadurch gekennzeichnet, dass** die Übertragungsvorrichtung eine weitere Verschlüsselungsvorrichtung (12; 15) umfasst, die mit der ersten Verschlüsselungsvorrichtung (6; 8) verbunden ist, um jede der verschlüsselten Nachrichten durch ein zweites Verschlüsselungsverfahren zu verschlüsseln.

10. Übertragungsvorrichtung nach einem der Ansprüche 7 bis 9, **dadurch gekennzeichnet, dass** die Erzeugungsvorrichtung die Authentifizierungssignale für die Benutzer aus der Vielzahl der Benutzer in einer vorbestimmten Reihenfolge erzeugt, und dass die Verschlüsselungsvorrichtung die gemeinsame Nachricht durch aufeinanderfolgendes Einsetzen der Verschlüsselungsverfahren der nicht berechtigten Benutzer aus der Vielzahl der Benutzer in Übereinstimmung mit der vordefinierten Reihenfolge verschlüsselt.

11. Übertragungsvorrichtung nach einem der Ansprüche 7 bis 10, **dadurch gekennzeichnet, dass** die Vielzahl der Benutzer über eine Anzahl von Benutzergruppen verteilt ist, und dass die Übertragungsvorrichtung eine einzelne verschlüsselte Nachricht an jede Benutzergruppe überträgt.

12. Empfangsvorrichtung, welche eine verschlüsselte Nachricht empfängt, zum Liefern des Zugangs zu Information für einen berechtigten Benutzer und zum Verweigern des Zugangs zu der Information für einen nicht berechtigten Benutzer, wobei die berechtigten und nicht berechtigten Benutzer kollektiv eine Vielzahl von Benutzern bilden, wobei die Empfangsvorrichtung umfasst:
- eine Erfassungsvorrichtung (100, 105, 106) zum Erfassen von benutzerspezifischen Signalen, die mit der verschlüsselten Nachricht empfangen werden, und
- eine Entschlüsselungsvorrichtung (107) zum Entschlüsseln der verschlüsselten Nachricht unter Einsatz der benutzerspezifischen Signale,
**dadurch gekennzeichnet, dass** die Empfangsvorrichtung umfasst:
- eine weitere Erfassungsvorrichtung (100, 106, 108), die mit der zuerst genannten Erfassungsvorrichtung verbunden ist, um aus den benutzerspezifischen Signalen ein Authentifizierungssignal zu erfassen, welches jedem Benutzer aus der Vielzahl der Benutzer zugeordnet ist und welches einen ersten oder zweiten Wert in dem Falle aufweist, dass ein Benutzer berechtigt bzw. nicht berechtigt ist, um Zugang zur Information zu erhalten, welche in der verschlüsselten Nachricht enthalten ist,
dass die Entschlüsselungsvorrichtung (107) mit der zweiten Erfassungsvorrichtung verbunden ist, um in Antwort auf das besagte Authentifizierungssignal mit dem ersten Wert die verschlüsselte Nachricht durch Entschlüsselungsverfahren zu entschlüsseln, die den nicht berechtigten Benutzer zugeordnet sind, und um in Antwort auf das Authentifizierungssignal mit dem zweiten Wert die verschlüsselte Nachricht nicht zu entschlüsseln, wobei jeder Benutzer aus der Vielzahl der Benutzer über die Entschlüsselungsverfahren verfügt, die den anderen aus der Vielzahl der Benutzer zum Entschlüsseln der verschlüsselten Nachricht zugeordnet sind, aber nicht über das Entschlüsselungsverfahren verfügt, welches mit dem besagten betreffenden Benutzer selbst verbunden ist.

13. Empfangsvorrichtung nach Anspruch 12, **dadurch gekennzeichnet, dass** die Empfangsvorrichtung Entschlüsselungsmittel (101) zum Entschlüsseln durch die entschlüsselte oder nicht verschlüsselte Nachricht für die zu empfangende Information aufweist.

14. Empfangsvorrichtung nach Anspruch 12 oder 13, **dadurch gekennzeichnet, dass** die Empfangsvorrichtung eine weitere Entschlüsselungsvorrichtung (103) aufweist, die mit der zuerst genannten Entschlüsselungsvorrichtung (107) verbunden ist zum Entschlüsseln der entschlüsselten Nachricht durch ein zweites Entschlüsselungsverfahren, um die darin enthaltene Information zu erhalten.

15. Empfangsvorrichtung nach einem der Ansprüche 12 bis 14, **dadurch gekennzeichnet, dass** die weitere Erfassungsvorrichtung so angeordnet ist, um die Authentifizierungssignale für die Benutzer aus der Vielzahl der Benutzer in einer vorbestimmten Reihenfolge zu erfassen, und dass die zuerst genannte Entschlüsselungsvorrichtung (107) die gemeinsame Nachricht durch aufeinanderfolgendes Anwenden der besagten Entschlüsselungsverfahren der nicht berechtigten Benutzer aus der Vielzahl der Benutzer in Übereinstimmung mit der besagten vorbestimmten Reihenfolge entschlüsselt.

16. Empfangsvorrichtung nach einem der Ansprüche 12 bis 15, **dadurch gekennzeichnet, dass** eine Gesamtzahl von Benutzern über eine Anzahl von Benutzergruppen verteilt wird, und dass die Empfangsvorrichtung weiterhin Erfassungsmittel (100, 106, 144) umfasst, um eine verschlüsselte Nachricht, die für eine entsprechende Benutzergruppe vorgesehen ist, zu erfassen.

## Revendications

1. Procédé de chiffrage et déchiffrage des messages, pour accorder aux utilisateurs autorisés l'accès à l'information, et refuser aux utilisateurs non autorisés l'accès à l'information, les utilisateurs autorisés et non autorisés formant collectivement une pluralité d'utilisateurs, chaque utilisateur étant associé à un procédé de chiffrage et de déchiffrage respectif, ce procédé comprenant les étapes de :
- chiffrage d'un message commun contenant l'information à transmettre aux utilisateurs de la pluralité d'utilisateurs de manière à former un message chiffré,
- transmission du message chiffré à la pluralité d'utilisateurs,
- réception du message chiffré par des utilisateurs de la pluralité d'utilisateurs, et
- déchiffrage du message chiffré par des utilisateurs de la pluralité d'utilisateurs,
**caractérisée en ce que** :
l'étape de chiffrage comprend successivement le chiffrage du message commun, uniquement par le biais de le procédé de chiffrage associé à chacun des utilisateurs non autorisés et le non chiffrage du message commun par le procédé de chiffrage associé à chacun des utilisateurs autorisés, de manière à former le message chiffré, et
l'étape de déchiffrage comprend successivement le déchiffrage du message chiffré par chaque utilisateur autorisé par le biais des procédés de déchiffrage associées aux utilisateurs non autorisés de la pluralité d'utilisateurs de manière à produire un message déchiffré et à obtenir l'accès à l'information qu'il renferme.

2. Procédé selon la revendication 1, **caractérisé en ce que** l'information est chiffrée par le biais du message non chiffré et peut être déchiffrée uniquement par le biais du message non déchiffré ou déchiffré.

3. Procédé selon la revendication 1 ou 2, **caractérisé en ce que** le message est chiffré préalablement à sa transmission par le biais d'un autre procédé de chiffrage, le message chiffré étant déchiffré après réception au moyen d'un autre procédé de déchiffrage.

4. Procédé selon l'une quelconque des revendications 1 ou 3, **caractérisé en ce que** le procédé comprend en outre une étape consistant à additionner au message commun chiffré un signal d'identification de l'utilisateur et un signal d'authentification pour chaque utilisateur de la pluralité d'utilisateurs, le signal d'authentification ayant une première ou une seconde valeur selon que ledit utilisateur est non autorisé ou autorisé, respectivement, et l'étape de déchiffrage étant réalisée par le déchiffrage successif du message chiffré par chaque utilisateur autorisé au moyen des procédés de déchiffrage associés aux utilisateurs non autorisés de la pluralité d'utilisateurs conformément aux signaux d'authentification additionnés au message chiffré.

5. Procédé selon la revendication 4, **caractérisé en ce que** l'addition au message commun chiffré des signaux d'identification de l'utilisateur et des signaux d'authentification pour chaque utilisateur de la pluralité d'utilisateurs s'effectue dans un ordre prédéfini, **en ce que** l'étape de chiffrage du message commun s'effectue au moyen des procédés de chiffrage associés aux utilisateurs non autorisés en conformité avec ledit ordre prédéfini, et **en ce que** l'étape de déchiffrage par le biais des procédés de déchiffrage associés aux utilisateurs non autorisés de la pluralité d'utilisateurs s'effectue dans l'ordre inverse dudit ordre prédéfini.

6. Procédés selon l'une quelconque des revendications 1 ou 5, **caractérisé en ce que** la pluralité d'utilisateurs est répartie sur un certain nombre de groupes d'utilisateurs, comprenant en outre l'étape de transmission d'un seul message chiffré à chaque groupe d'utilisateurs.

7. Émetteur qui transmet les messages chiffrés aux utilisateurs, afin d'accorder aux utilisateurs autorisés l'accès à l'information et de refuser aux utilisateurs non autorisés l'accès à l'information, les utilisateurs autorisés et non autorisés formant collectivement une pluralité d'utilisateurs, chaque utilisateur étant associé à un procédé de chiffrage respectif, l'émetteur comprenant :
un dispositif de chiffrage (6, 8) pour le chiffrage d'un message commun à transmettre aux utilisateurs de la pluralité d'utilisateurs, et
un dispositif additionneur (11, 14) pour additionner des signaux spécifiques de l'utilisateur au message commun chiffré, **caractérisé en ce que** l'émetteur comprend en outre :
un générateur (7, 9) pour générer un signal d'authentification correspondant pour chacun des utilisateurs de la pluralité d'utilisateurs, le signal d'authentification correspondant pour chaque utilisateur ayant une première ou une seconde valeur selon que chaque dit utilisateur est non autorisé ou autorisé, respectivement,
le dispositif de chiffrage (6, 8) ayant une unité de commande (24, 29) pour recevoir le signal d'authentification correspondant à chacun des utilisateurs de ladite pluralité d'utilisateurs et, en réponse au signal d'authentification ayant une première valeur, chiffrer le message commun par le biais de le procédé de chiffrage associé à chacun desdits utilisateurs non autorisés et, en réponse à un signal d'authentification ayant une seconde valeur, ne pas chiffrer le message, et les signaux d'authentification correspondant à la pluralité d'utilisateurs étant contenus dans les signaux spécifiques de l'utilisateur.

8. Émetteur selon la revendication 7, **caractérisé en ce que** l'émetteur comprend des moyens de chiffrage (3) en vue de chiffrer, par le biais du message commun, l'information à transmettre aux utilisateurs.

9. Émetteur selon la revendication 7 ou 8, **caractérisé en ce que** l'émetteur comprend un autre dispositif de chiffrage (12, 15) couplé au premier dispositif de chiffrage (6, 8) pour chiffrer chacun des messages chiffrés au moyen d'un deuxième procédé de chiffrage.

10. Émetteur selon l'une quelconque des revendications 7, 9, **caractérisé en ce que** le générateur génère des signaux d'authentification pour les utilisateurs de la pluralité d'utilisateurs dans un ordre prédéfini, et **en ce que** le dispositif de chiffrage chiffre le message commun en utilisant successivement les procédés de chiffrage des utilisateurs non autorisés de la pluralité d'utilisateurs conformément audit ordre prédéfini.

11. Émetteur selon l'une quelconque des revendications 7, 10, **caractérisé en ce que** la pluralité d'utilisateurs est répartie sur un certain nombre de groupes d'utilisateurs, et que l'émetteur transmet un seul message chiffré à chaque groupe d'utilisateurs.

12. Récepteur, qui reçoit un message chiffré, afin d'accorder aux utilisateurs autorisés l'accès à l'information et de refuser aux utilisateurs non autorisés l'accès à l'information, les utilisateurs autorisés et non autorisés formant collectivement une pluralité d'utilisateurs, dans lequel le récepteur comprend :
un dispositif de détection (100, 105, 106) pour détecter des signaux spécifiques de l'utilisateur reçus avec le message chiffré, et
un dispositif de déchiffrage (107) pour déchiffrer le message chiffré en utilisant les signaux détectés spécifiques de l'utilisateur,
**caractérisé en ce que** le récepteur comprend :
un autre dispositif de détection (100, 106, 108), couplé au premier dispositif de détection mentionné, pour détecter, à partir des signaux spécifiques de l'utilisateur, un signal d'authentification associé à chaque utilisateur de la pluralité d'utilisateurs, ayant une première ou une seconde valeur selon qu'un utilisateur est non autorisé ou autorisé, respectivement, pour accéder à l'informaticn contenue dans le message chiffré,
le dispositif de déchiffrage (107) étant couplé au second dispositif de détection pour déchiffrer, en réponse audit signal d'authentification ayant une première valeur, le message chiffré par le biais des procédés de déchiffrage associés aux utilisateurs non autorisés, et, en réponse au signal d'authentification ayant une seconde valeur, pour ne pas déchiffrer le message chiffré dans lequel chaque utilisateur de la pluralité d'utilisateurs dispose des procédés de déchiffrage associés aux autres membres de la pluralité d'utilisateurs pour le déchiffrage du message chiffré, mais ne dispose pas de le procédé de déchiffrage associé à chaque utilisateur proprement dit.

13. Récepteur selon la revendication 12, **caractérisé en ce que** le récepteur comprend des moyens de déchiffrage (102) pour déchiffrer, par le biais du message déchiffré ou non chiffré, l'information à recevoir.

14. Récepteur selon la revendication 12 ou 13, **caractérisé en ce que** le récepteur comprend un autre dispositif de déchiffrage (103) couplé au premier dispositif de déchiffrage mentionné (107) pour déchiffrer le message déchiffré au moyen d'un deuxième procédé de déchiffrage afin d'aboutir à l'information qu'il renferme.

15. Récepteur selon l'une quelconque des revendications 12, 14, **caractérisé en ce que** le dispositif de détection supplémentaire a été mis en place en vue de détecter les signaux d'authentification pour les utilisateurs de la pluralité d'utilisateurs dans un ordre prédéfini, et **en ce que** le premier dispositif de déchiffrage mentionné (107) déchiffre le message commun en utilisant successivement les procédés de déchiffrage des utilisateurs non autorisés de la pluralité d'utilisateurs en conformité avec ledit ordre prédéfini.

16. Récepteur selon l'une quelconque des revendications 12, 15, **caractérisé en ce que** un nombre total d'utilisateurs est réparti sur un certain nombre de groupes d'utilisateurs, et **en ce que** le récepteur comprend en outre des moyens de détection (100, 106, 144) pour détecter un message chiffré destiné à un groupe d'utilisateurs correspondant.
